# EUROPEAN PATENT SPECIFICATION

(11) **EP 1 894 612 B1**
(45) Date of publication and mention of the grant of the patent: **02.10.2013**
(21) Application number: 07016973.5
(22) Date of filing: 30.08.2007
(51) Int. Cl.: B01D 61/02, C02F 1/44

(54) **Method for purifying water by means of a membrane filtration unit**
Verfahren zur Reinigung von Wasser über eine Membranfilterungseinheit
Procédé de purification d'eau au moyen d'une unité de filtration de membrane

(30) Priority: 01.09.2006 NL 1032403
(43) Date of publication of application: 05.03.2008
(73) Proprietor: Vitens Friesland, 8912 AA Leeuwarden (NL)
(72) Inventor: Van der Meer, Walterus Gijsbertus Joseph, 8604 VM Sneek (NL)
(74) Representative: op den Brouw-Sprakel, Vera Stefanie Irene

(56) References cited:
- WO-A1-2005/068371
- WO-A2-97/18166
- WO-A2-2005/012180
- NL-C2- 1 028 484
- US-A- 3 906 250
- US-A- 4 156 645
- US-A- 4 781 837
- US-A- 5 098 575
- US-A1- 2004 188 348
- RAUTENBACH R: "Membranverfahren", 1 January 1997 (1997-01-01), MEMBRANVERFAHREN. GRUNDLAGEN DER MODUL- UND ANLAGENAUSLEGUNG, XX, XX, PAGE(S) 152 - 155, XP002508147, ISBN: 3-540-61573-3

## Description

The present invention relates to a method for purifying water by means of a membrane filtration unit.

Membrane filtration is a widely used separation technique for purifying water, such as surface water, process water and waste water. Membrane filtration may also be used for removing suspended components, colloidal material and bacteria from water. Using a so-called ultrafiltration membrane filtration unit, it is furthermore possible to remove viruses and other microbiological pathogens from water.

From US patent No. 6,592,763, for example, a method is known wherein the effluent from a bioreactor is supplied to an ultrafiltration unit and separated into a permeate flow and a concentrate flow therein, which permeate flow is subsequently supplied to, for example, a membrane filtration unit of the nanofiltration type, in which a separation into a product flow and a discharge flow containing dissolved substances takes place.

US patent No. 5,098,575 relates to a method for desalinating water, in which a process consisting of two stages is carried out. In a first stage, natural osmosis takes place, in which salt water is supplied to a vessel, in which vessel another vessel provided with a semipermeable membrane is submerged. Said other vessel contains a so-called "intermediate liquid", for example a concentrated sugar solution, which sugar solution has a significantly higher osmotic pressure than the salt water, so that pure water obtained from the salt water will pass through the membrane as a result of natural osmosis to dilute the concentrated solution. The intermediate liquid thus diluted is pumped to a second stage, in which reverse osmosis takes place, and pure water is thus discharged. The intermediate liquid is subsequently returned to the other vessel via a pump so as to thus complete the cycle.

In US patent application US 2004/0188348 it is indicated that a concentrated brine solution is obtained via a submerged membrane unit and a reverse osmosis unit arranged in series therewith, which solution is subsequently returned to the membrane unit via an intermediate step.

Dutch patent application No. 1 028 484 (not pre-published) discloses a membrane filtration unit for treating an aqueous waste flow from a bioreactor, in which the membrane filtration unit is submerged in the bioreactor itself, to which bioreactor the aqueous waste flow is supplied.

If membrane filtration is used in the domain of drinking water purification, a waste flow containing about 20 % of the original feed flow supplied to the membrane filtration unit is obtained at all times. Said waste flow, also called brine or concentrate, comprises a high concentration of retained substances, for example pesticides, herbicides, salts, bacteria, viruses and the like. As a result of the purification step carried out in the membrane filtration unit, the concentrations of the aforesaid substances will be many times higher than in the unpurified feed flow, generally said concentration will be at least five times higher. A problem that presents itself when using such a separation technique is the subsequent discharge or disposal of the waste water flow that has been produced. The authorities impose stringent requirements as regards the possible discharge of a waste water flow and, in view of the high concentration of waste products in such a waste water flow, such waste flows may not be simply discharged into the sewer system and/or the surface water, but additional purification steps are required, involving significant costs.

Thus it is an object of the present invention to provide a method for treating an aqueous flow in a membrane filtration unit, wherein the obtained concentrate flow is discharged in an environmentally advantageous manner.

Another object of the present invention is to provide a method for treating an aqueous flow in a membrane filtration unit, wherein no additional purification operations are required.

Yet another object of the present invention is to provide a method for large-scale preparation of drinking water in an environmentally advantageous manner.

According to the present method a first membrane filtration unit is submerged in the water to be purified, wherein the water surrounding the first membrane filtration unit is sucked into the interior of the first membrane filtration unit under the influence of osmotic pressure, in which first membrane filtration unit an osmotic agent is present, wherein the permeate flow from the first membrane filtration unit is supplied to a second membrane filtration unit and separated therein into a product flow, which comprises the purified water, and a concentrate flow, which concentrate flow is returned to the interior of the first membrane filtration unit submerged in the water to be purified, which method is characterised by the characterizing part of claim 1.

When such a method is used, with the water to be purified in particular being selected from the group consisting of surface water, salt water and brackish water, the water to be purified is in fact directly withdrawn, and the impurities, which will be present on the outer side of the first membrane filtration unit, are simply left behind in the water yet to be purified, viz. the water surrounding the first membrane filtration unit. Thus a mixture of osmotic agent and water that has passed the membrane is present in the interior of the first membrane filtration unit. This means that a concentrate flow, which would eventually have to be discharged, is not obtained, but that the concentrate flow will mix with the large amount of water present around and on the outer side of the first membrane filtration unit. An advantage of such a method is that no materials are discharged, and that thus no legal restrictions apply in this regard.

The term "submerged" is to be understood to mean that the membrane surface that is necessary for the purification process is disposed below the surface of the water to be purified. The term "membrane filtration unit" is to be understood to mean that there is at least one membrane module, whilst the number of membrane modules, arranged in parallel or in series, is in fact not limited to any particular number. Although it has been indicated that the permeate flow from the first membrane filtration unit is supplied to the second membrane filtration unit, one or more intermediate steps may be carried out in a special embodiment, for example the addition of an extra amount of osmotic agent, the use of a drainpipe for removing substances that have accumulated, or of a flush pipe for cleaning purposes, which one or more intermediate steps may be carried out at random positions in the cycle.

Although a submerged membrane filtration unit is known from Japanese publication JP 7116482, a concentrate flow that needs to be discharged is still obtained in such a configuration.

The second membrane filtration unit is selected from the group comprising reverse osmosis (RO) and nanofiltration (NF) membrane filtration units.

The first membrane filtration unit is selected from nanofiltration (NF) membrane units.

Examples of surface water include for example a lake, a brook, a river or a canal, wherein the volume of water surrounding the first membrane filtration unit is so large that no increase in the amount of impurities will be perceptible. In fact the impurities remain behind in the medium from which the water to be purified is withdrawn. Since the medium from which the water to be purified is withdrawn will by nature be slightly in motion in practice, think in this connection of natural currents and the influence of the wind, no permanent accumulation of impurities around the first membrane filtration unit will be observed.

The present method is in particular suitable for use in situations in which the volume of the water to be purified, in which the first membrane filtration unit is submerged, is at least 100 times, preferably 1000 times, and in principle an infinite number of times larger than the volume which the first membrane filtration unit itself takes up in the water to be purified. Since the volume of the water surrounding the first membrane filtration unit is thus in fact an infinite number of times larger, there is no need to effect a flow of the water to be purified past the membrane surface via pumps, pipes, valves and the like, which has significant advantages. According to the present invention the water to be purified is not present in an artificially closed space, container or tank, but it concerns a large, whether or not natural water body, such as a pond, a ditch, a lake, a brook, a river or a canal, in which the first membrane filtration unit is submerged, which large water body may or may not be in communication with other water sources, such as seas or inland waters.

In the present invention it is preferable to use osmotic pressure for the production of permeate in the first membrane filtration unit, in which connection the present inventors have found that by using osmotic pressure as a driving force, the retention of salts by the first membrane filtration unit becomes very high, which is in particular advantageous when using the present method for the preparation of very pure water. Because of the presence of the osmotic agent, a saline solution, in the first membrane filtration unit the water to be purified, which surrounds the membrane filtration unit, is sucked through the membrane via the osmotic pressure difference that is thus effected. Since it is thus possible to apply a high osmotic pressure, a high flux can be obtained.

Suitable saline solutions include salts of bivalent anions and cations, which do not pass through the membrane of both the first and the second membrane filtration unit, such as sea water, MgSO₄, AlS0₄, ZnSO₄, a concentrate flow from a desalination plant, for example a plant in which evaporation techniques or RO membranes are used. In particular MgSO₄ is a suitable salt because it is capable of dissolving in a high concentration and consequently provides a high osmotic pressure, with an amount of MgSO₄ of 0.1-5 wt.%, in particular 0.5-1.5 wt.%, being preferred. A value of less than 0.1 wt.% results in too low an osmotic pressure, whilst a value in excess of 5 wt.% leads to solubility problems.

An advantage of the present invention is in particular the high flux in the first and the second membrane filtration unit. Said high flux is in particular caused by the fact that a much higher suction force can be applied by means of osmotic pressure obtained from an MgSO₄ solution, for example, than by means of a physical vacuum, which is in theory limited to a value of 1 bar. The use of present method is therefore more advantageous for cost reasons than the use of a membrane filtration unit which employs a physical vacuum. Furthermore it is assumed that the extent to which fouling of the membranes occurs will be small.

In a special embodiment of the present invention the product flow may be subjected to one or more additional treatments, such as a treatment with ozone, oxygen or an extra purification step.

Preferably, the second membrane filtration unit is not disposed in the water to be purified, but for example on shore. The concentrate flow is thus circulated in a closed system of first and second membrane filtration units and the associated pipes, pumps and valves, such as are apparent to those skilled in the art.

Membrane filtration units of the RO/NF type have proven to be suitable membrane filtration units.

To create a vacuum on the permeate side of the first membrane filtration unit the first membrane filtration unit is provided with means for applying a vacuum, an inlet pipe for supplying an osmotic agent, such as a saline solution.

The permeate pipe of the first membrane filtration unit is in particular connected to the inlet pipe of the second membrane filtration unit, with the concentrate pipe of the second membrane filtration unit being connected to the inlet pipe for supplying the osmotic agent, in particular a saline solution, to the first membrane filtration unit.

The present invention will now be explained by means of an example, in which connection it should be understood, however, that the present invention is by no means limited to such a special example.

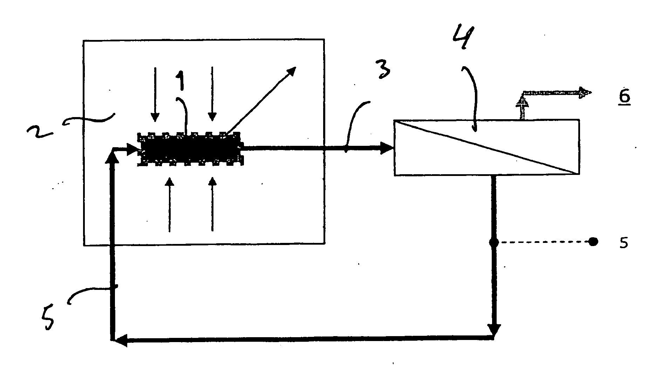

The appended figure shows a first membrane filtration unit 1, which is submerged in water 2, for example the IJsselmeer. For the sake of clarity pumps, filters, valves and pipes, as known to those skilled in the art, have been left out. To effect an osmotic pressure in the interior of the membrane filtration unit 1, an osmotic agent, such as a saline solution, is supplied via the pipe 5, which saline solution, to which the water that has been sucked into the first membrane filtration unit 1 has been added, is supplied as a permeate flow to a second membrane filtration unit 4 via the pipe 3. In the second membrane filtration unit 4 a separation of the permeate flow is carried out, with the purified water being discharged as a product flow via the pipe 6 and the thickened saline solution being returned to the first membrane filtration unit 1 as a concentrate flow via the pipe 5.

In a special embodiment the product flow, which is discharged via the pipe 6, may be subjected to one or more additional treatments (not shown), which treatments are known to those skilled in this field of the art.

Since the first membrane filtration unit 1 is present in a very large volume of water 2, the impurities retained at the surface of the first membrane filtration unit 1 will dilute with the same water 2, so that there will be no question of an increased level of impurities in the water 2. When such a method is used, it is no longer necessary to discharge a concentrate flow containing impurities, which is advantageous with a view to obtaining licences. In fact, the contaminants remain in the water 2 because there is no discharge anymore.

In practice the first membrane filtration unit 1, which may consist of a number of individual membranes, arranged in parallel or in series, is placed off the shore in the water to be purified, and the permeate flow is subsequently discharged, preferably to the shore, and further purified in another membrane filtration unit. Since the first membrane filtration unit is disposed in the water to be purified and utilises the osmotic pressure difference between the water to be purified and the medium present in the first membrane filtration unit, no pumps or pipes are required for generating a flow of the water to be purified past the membrane surface, which is a major advantage for technical as well as financial reasons.

## Claims

1. A method for purifying water by means of a membrane filtration unit, wherein a first membrane filtration unit is submerged in the water to be purified, wherein the water surrounding the first membrane filtration unit is sucked into the interior of the first membrane filtration unit under the influence of osmotic pressure, in which first membrane filtration unit an osmotic agent is present, wherein the permeate flow from the first membrane filtration unit is supplied to a second membrane filtration unit, and separated therein into a product flow, which comprises the purified water, and a concentrate flow, which concentrate flow is returned to the interior of the first membrane filtration unit submerged in the water to be purified, **characterised in that** a saline solution is used as the osmotic agent, wherein the water to be purified is a large water body not being present in an artificially closed space, container or tank.

2. A method according to claim 1, **characterised in that** the first membrane filtration unit is selected from nanofiltration (NF) membrane filtration units.

3. A method according to claim 1, **characterised in that** the second membrane filtration unit is selected from the group comprising reverse osmosis (RO) and nanofiltration (NF) membrane filtration units.

4. A method according to any one or more of the preceding claims, **characterised in that** the water to be purified is selected from the group consisting of surface water, salt water and brackish water.

5. A method according to any one or more of the preceding claims, **characterised in that** the saline solution is selected from the group consisting of sea water, MgSO₄, AlSO₄, ZnSO₄ and a concentrate flow from a desalination plant, or a combination thereof.

## Patentansprüche

1. Verfahren zum Aufbereiten von Wasser durch eine Membranfiltrations-einheit, wobei eine erste Membranfiltrationseinheit in dem aufzubereitenden Wasser eingetaucht wird, wobei das die erste Membranfiltrationseinheit umgebende Wasser in das Innere der ersten Membranfiltationseinheit unter dem Einfluss eines osmotischen Drucks eingesaugt wird, wobei in der ersten Membranfiltrationseinheit ein osmotisches Mittel vorhanden ist, wobei der Permeatfluss von der ersten Membranfiltrationseinheit einer zweiten Membranfiltrationseinheit zugeführt wird, und darin in einen Produktfluss, der das aufbereitete Wasser umfasst, und einen Konzentratfluss getrennt wird, der zu dem Inneren der ersten Membranfiltrationseinheit, die in dem aufzubereitenden Wasser eingetaucht ist, zurückgeführt wird, **dadurch gekennzeichnet, dass** eine Salzlösung als das osmotische Mittel verwendet wird, wobei das aufzubereitende Wasser ein größeres Gewässer ist, das nicht in einem künstlich geschlossenen Raum, Behälter oder Becken, vorhanden ist.

2. Verfahren nach Anspruch 1, **dadurch gekennzeichnet, dass** die erste Membranfiltrationseinheit aus Nanofiltrations- (NF) Membranfiltrationseinheiten ausgewählt ist.

3. Verfahren nach Anspruch 1, **dadurch gekennzeichnet, dass** die zweite Membranfiltrationseinheit aus der Umkehrosmose- (RO) und Nanofiltrations-(NF) Membranfiltrationseinheiten umfassenden Gruppe ausgewählt ist.

4. Verfahren nach einem oder mehreren der vorhergehenden Ansprüche, **dadurch gekennzeichnet, dass** das aufzubereitende Wasser aus der aus Flächengewässer, Salzgewässer und Brackgewässer bestehenden Gruppe ausgewählt ist.

5. Verfahren nach einem oder mehreren der vorhergehenden Ansprüche, **dadurch gekennzeichnet, dass** die Salzlösung aus der aus Meerwasser, MgSO₄, AlSO₄, ZnSO₄ und einem Konzentratfluss aus einer Entsalzungsanlage oder einer Kombination davon bestehenden Gruppe ausgewählt ist.

## Revendications

1. Procédé de purification d'eau au moyen d'une unité de filtration de membrane, dans lequel une première unité de filtration de membrane est immergée dans l'eau à purifier, dans lequel l'eau entourant la première unité de filtration de membrane est aspirée à l'intérieur de la première unité de filtration de membrane sous l'influence de la pression osmotique, laquelle première unité de filtration de membrane contient un agent osmotique, dans lequel le flux de perméat provenant de la première unité de filtration de membrane est transmis à une seconde unité de filtration de membrane, et y séparé en un flux de produit qui comprend l'eau purifiée, et un flux de concentré qui retourne à l'intérieur de la première unité de filtration de membrane immergée dans l'eau à purifier, **caractérisé en ce qu'**une solution saline est utilisée comme agent osmotique dans lequel l'eau à purifier est un grand corps d'eau qui n'est pas présent dans un espace artificiellement fermé, conteneur ou réservoir.

2. Procédé selon la revendication 1, **caractérisé en ce que** la première unité de filtration de membrane est sélectionnée parmi des unités de filtration de membrane à nanofiltration (NF).

3. Procédé selon la revendication 1, **caractérisé en ce que** la seconde unité de filtration de membrane est sélectionnée dans le groupe comprenant des unités de filtration de membrane à osmose inverse (RO) et à nanofiltration (NF).

4. Procédé selon l'une ou plusieurs quelconques des revendications précédentes, **caractérisé en ce que** l'eau à purifier est sélectionnée dans le groupe composé d'eau de surface, d'eau salée et d'eau saumâtre.

5. Procédé selon l'une ou plusieurs quelconques des revendications précédentes, **caractérisé en ce que** la solution saline est sélectionnée dans le groupe composé d'eau de mer, de MgSO₄, d'AlSO4, de ZnSO₄ et d'un flux de concentré provenant d'une usine de dessalement ou d'une combinaison de ceux-ci.
